# EUROPÄISCHE PATENTSCHRIFT

(11) **EP 0 743 875 B1**
(45) Veröffentlichungstag und Bekanntmachung des Hinweises auf die Patenterteilung: **04.11.1998**
(21) Anmeldenummer: 95908240.5
(22) Anmeldetag: 01.02.1995
(51) Int. Cl.: B01D 53/64, B01D 53/50

(54) **ANORDNUNG UND VERFAHREN ZUR UMWELTVERTRÄGLICHEN RAUCHGASREINIGUNG**
ENVIRONMENTALLY FRIENDLY FLUE GAS PURIFICATION PROCESS AND SYSTEM
PROCEDE ET SYSTEME D'EPURATION NON-POLLUANTE DE GAZ DE FUMEE

(30) Priorität: 11.02.1994 DE 4404284
(43) Veröffentlichungstag der Anmeldung: 27.11.1996
(73) Patentinhaber: STEAG AG, D-45128 Essen (DE)
(72) Erfinder: BRÜGGENDICK, Hermann, D-46514 Schermbeck (DE)
(86) Internationale Anmeldenummer: EP9500353
(87) Internationale Veröffentlichungsnummer: WO9521685

(56) Entgegenhaltungen:
- EP-A- 0 253 563
- EP-A- 0 578 629
- EP-A- 0 628 341
- DE-A- 4 124 844
- MULL UND ABFALL, Bd. 25,Nr. 6, Juni 1993 BERLIN, Seiten 450-459, LOTHAR KRÄTZIG 'Nachrüstung der Rauchgasreinigungsanlage der Müllverwertungsanlage Ingolstadt, Verbrennungslinie III'

## Beschreibung

Die Erfindung bezieht sich auf eine Anordnung bzw. ein Verfahren zur Reinigung der Rauchgase einer Verbrennungsanlage nach dem Oberbegriff der Ansprüche 1 bzw. 19.

Aus der Praxis sind verschiedene Möglichkeiten zur Reinigung von Rauchgasen bekannt. In einem ersten Verfahren werden die Rauchgase zunächst zur Vorreinigung mehrmals gefiltert, wobei ein Kühlschritt zwischengeschaltet ist. Anschließend wird das Rauchgas mit einem Gemisch aus Kalkstein und Wasser gewaschen. Als Reaktionsprodukt fällt dabei Gips an. Zur Nachreinigung wird dem Rauchgas ein adsorbierendes Gemisch aus Kalkhydrat und Aktivkoks zugeführt. In einem nachgeschalteten Filter wird das beladene adsorbierende Gemisch aus dem Rauchgasstrom abgeschieden. Ein erheblicher Nachteil dieses Verfahrens liegt darin, daß große Mengen an nicht weiter verwendbaren Reststoffen an den verschiedenen Filterstufen anfallen. Die Entsorgung dieser Reststoffe ist aufwendig und kostspielig, zumal häufig Dioxine und Furane in diesen Reststoffen enthalten sind. Das nach der Nachreinigung gewonnene Reingas hat eine vergleichsweise hohe Restkonzentration an Schwermetallen.

In einem anderen bekannten Verfahren der gattungsgemäßen Art wird das Rauchgas zunächst auch mit Zwischengeschaltetem Kühlschritt mehrfach gefiltert. Anschließend wird das Rauchgas mit Wasser und Kalkhydrat gewaschen. Beim Waschvorgang fällt in analoger Weise als Reaktionsprodukt Gips an. Die Nachreinigung des Rauchgases erfolgt durch eine Aktivkoks-Adsorptionsanlage. Das beladene Altkoks wird in die Verbrennungsanlage zurückgeführt und dort verbrannt. Auf diese Weise ist die Menge der anfallenden Reststoffe erheblich reduziert. Vorteilhaft ist zudem, daß Aktivkoks auch Dioxine und Furane bindet, die dann bei der Feuerung aufgrund der hohen Temperaturen zerstört werden. Die Feuerung selbst ist also Senke für derartige Schadstoffe. Dieses bekannte Verfahren hat den Nachteil, daß die Qualität des als Reaktionsprodukt anfallenden Gipses unbefriedigend ist, insbesondere eine zu hohe Schwermetallkonzentration aufweist.

Aus der DE 41 24 844 ist ein Verfahren bekannt, bei dem zwischen einer ersten Filtervorrichtung und einer zweiten Filtervorrichtung eine Sprühtrocknungsvorrichtung eingeschaltet ist. Der zweiten Filtervorrichtung ist eine Naßrauchgasentschwefelungsanlage nachgeschaltet, in der Gips erzeugt wird. Das Filtrat aus der Entwässerung des erzeugten Gipses wird in dem Sprühtrockner zum Trocknen eingedampft. Nach der ersten Filtereinrichtung wird zur Vorreinigung der zu reinigenden Rauchgase ein vorwiegend aus Kohlenstoff bestehendes staubförmiges Adsorbens in die Rauchgase eingeblasen. Das Einblasmedium wirkt infolge fehlender Verdampfungsverluste nicht wesentlich zum Kühlen Rauchgase aufniedrigere Temperaturen, bei denen das Adsorptionsmittel ein größeres Adsorptionsvermögen zeigt.

Aufgabe der Erfindung ist es deshalb, die Rauchgase einer Verbrennungsanlage so zu reinigen, daß unter Beibehaltung der genannten Vorteile ein Gips mit verringerter Schadstoffkonzentration bei vereinfachter Verfahrensführung anfällt.

Diese Aufgabe wird erfindungsgemäß durch die Merkmale im Kennzeichen des Anspruchs 1 gelöst.
daß eine Einleitungsstelle für kohlenstoffhaltiges Adsorbens vor der zweiten Filtereinrichtung, vorzugsweise zwischen der Kühleinrichtung und der zweiten Filtereinrichtung angeordnet ist.

Verfahrensgemäß wird diese Aufgabe durch die Merkmale des Patentanspruchs 19 gelöst.

Durch die Erfindung gelingt es, bei der Rauchgasreinigung das Reaktionsprodukt Gips mit vergleichsweise geringen Schwermetallkonzentrationen zur Verfügung zu stellen. Beispielsweise die Quecksilberkonzentration im Gips kann von bisher 4,32mg/kg auf 1,48mg/kg bei 10%igem Wasseranteil des Gipses reduziert werden (unter der Annahme einer jeweils 50%igen Hg-Abscheidung sowohl in der Wascheinrichtung als auch in der Flugstromanlage). Die Gefahr der Freisetzung von Schwermetallen sowohl bei der Bearbeitung des Gipses als auch in mit Gips ausgekleideten Räumen wird erheblich reduziert. Die Erfindung verringert zudem das Risiko der Grundwasserbelastung durch ausgewaschene Schwermetalle. Das erfindungsgemäß gewonnene Gipsprodukt hat eine mit REA-Gipsen hoher Qualität vergleichbare Reinheit und eröffnet dementsprechend optimale Absatzmöglichkeiten. Die erzielbaren Preise sind der guten Qualität des Gipses entsprechend hoch. Die mit dem bekannten gattungsgemäßen Verfahren erzielbare Rauchgasreinheit wird durch die Erfindung nicht nur erreicht, sondern noch übertroffen; die Schadstoffkonzentration des Reingases ist verschwindend gering.

Die Einleitungsstelle für kohlenstoffhaltiges Adsorbens in einer zur Kühleinrichtung führenden Wasserleitung als einzige Einleitungsstelle für das kohlenstoffhaltige Adsorbens vor der zweiten Filtereinrichtung vorgesehen sein. Zusätzlich kann kohlenstoffhaltiges Adsorbens an weiteren Stellen vor der zweiten Filtereinrichtung direkt in den Rauchgasstrom eingeleitet werden.

In bevorzugter Weiterbildung ist als erste Filtervorrichtung ein Elektrofilter vorgesehen. Von diesem wird die Flugasche aus dem Rauchgasstrom weitgehend abgeschieden.

Die zweite Filtervorrichtung ist vorteilhafterweise als Gewebefilter ausgebildet. Von diesem Gewebefilter werden die Salze und Chloride des Rauchgasstromes und des verdampften Wassers abgetrennt.

Vorteilhafte Ausführungsformen und Weiterbildungen der Erfindung sind durch die Unteransprüche gekennzeichnet.

Im folgenden wird die Erfindung anhand eines Ausführungsbeispiels näher erläutert. In der Zeichnung zeigen:
- Fig. 1: eine schematische Darstellung der erfindungsgemäßen Rauchgasreinigungsanordnung;
- Fig. 2a: ein Diagramm mit Hg-Konzentrationen und Massenströmen an verschiedenen Stellen einer bekannten Rauchgasreinigungsanlage; und
- Fig. 2b: ein Diagramm entsprechend Fig. 2a der erfindungsgemäßen Anordnung.

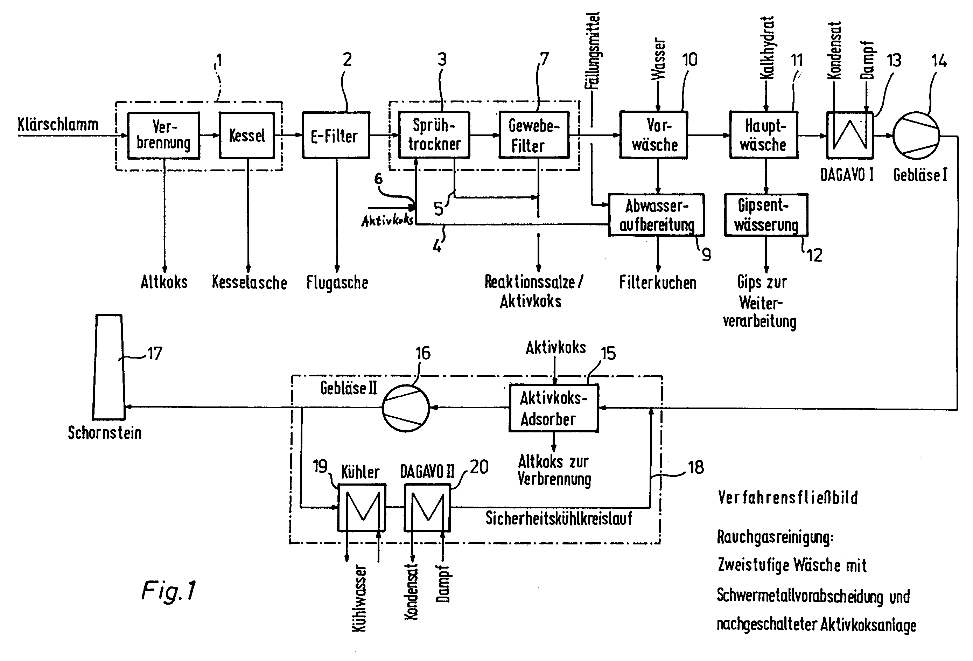

Fig. 1 zeigt eine schematische Darstellung der erfindungsgemäßen Rauchgasreinigungsanordnung. In dem beschriebenen Ausführungsbeispiel wird in einer Verbrennungsanlage 1 Klärschlamm verbrannt, der bekanntlich eine hohe Schadstoffbelastung hat und dessen Entsorgung als besonders problematisch gilt. In dem Rauchgasstrom der Verbrennungsanlage ist ein Elektrofilter 2 angeordnet, das die Flugasche von dem Rauchgasstrom abscheidet. In einem Sprühtrockner 3 wird über eine Leitung 4 zugeführtes Wasser in den Rauchgasstrom eingesprüht. Das Wasser verdampft aufgrund der hohen Rauchgastemperatur, und die dazu benötigte Verdampfungswärme wird dem heißen Rauchgas entzogen, wodurch die Temperatur des Rauchgases von etwa 220°C auf etwa 140°C gesenkt wird. Die im Wasser enthaltenen Salze, insbesondere Chloride kristallisieren im Sprühtrockner 3 aus. Ein Teil anfallender Feststoffe wird über eine Leitung 5 abgeführt. Der Leitung 4 wird an einer Einleitungsstelle 6 staubförmiger Aktivkoks zugeführt. Der Aktivkoks adsorbiert einen großen Teil der Schwermetalle und anderer Schadstoffe. Ein Gewebefilter 7 hinter der Einleitungsstelle 6 fängt den beladenen Aktivkoks und weitere Feststoffe aus dem Rauchgasstrom auf. Der Rauchgasstrom wird anschließend in einem Vorwäscher 10 mit Wasser gewaschen, und dabei wird die Rauchgastemperatur auf etwa 70°C abgekühlt. Beim Vorwaschen werden die Halogene, Schwermetalle, Schwefeloxide und der Reststaub weitgehend abgeschieden. Das aus dem Vorwäscher 10 abgezogene Abwasser wird in einer Abwasseraufbereitungsanlage 9 unter Zugabe eines Fällungsmittels aufbereitet. Die als Filterkuchen anfallenden Reststoffe werden aus der Anlage 9 ausgeschieden und geeignet entsorgt. Das gereinigte Abwasser wird über die Leitung 4 zu dem Sprühtrockner 3 als Kühlwasser für das Rauchgas zurückgeführt. Dem vorgereinigten Rauchgas wird in einem Hauptwäscher 11 Kalkhydrat zugesetzt. Dieses reagiert mit den Schwefeloxiden zu einer Gipssuspension, die in einer Gipsentwässerungsanlage 12 entwässert wird. Der entwässerte Gips (Gipsdihydrat) wird extern weiterverarbeitet. In einem dem Hauptwäscher 11 nachgeschalteten Rauchgaserhitzer 13 wird das Rauchgas durch das Hindurchführen von Dampf auf eine für die nachfolgende Adsorption notwendige Temperatur aufgeheizt. Ein hinter dem Rauchgaserhitzer 13 angeordnetes erstes Gebläse 14 erzeugt einen Saugstrom zur Einstellung der notwendigen Druckverhältnisse in der Verbrennungsanlage 1 und für den Rauchgastransport aus der Verbrennungsanlage. In einer dem Gebläse 14 nachgeschalteten Aktivkoksadsorberanlage 15 wird das Rauchgas durch die Adsorption des Aktivkoks' von restlichen Schwefeloxiden, Halogenwasserstoffen, Schwermetallen, Staub und organischen Substanzen, ggf. Dioxinen und Furanen befreit. Der dabei anfallende belastete Aktivkoks wird an die Verbrennungsanlage 1 zurückgeführt und dort verbrannt. Ein der Aktivkoksanlage 15 nachgeschaltetes zweites Gebläse 16 transportiert das Rauchgas zum Schornstein 17. Ein Sicherheitskühlkreislauf 18 mit Kühleinheit 19 und zweitem Rauchgaserhitzer 20 ist vom Ausgang des zweiten Gebläses 16 zum Eingang der Aktivkoksanlage 15 zurückgeführt.

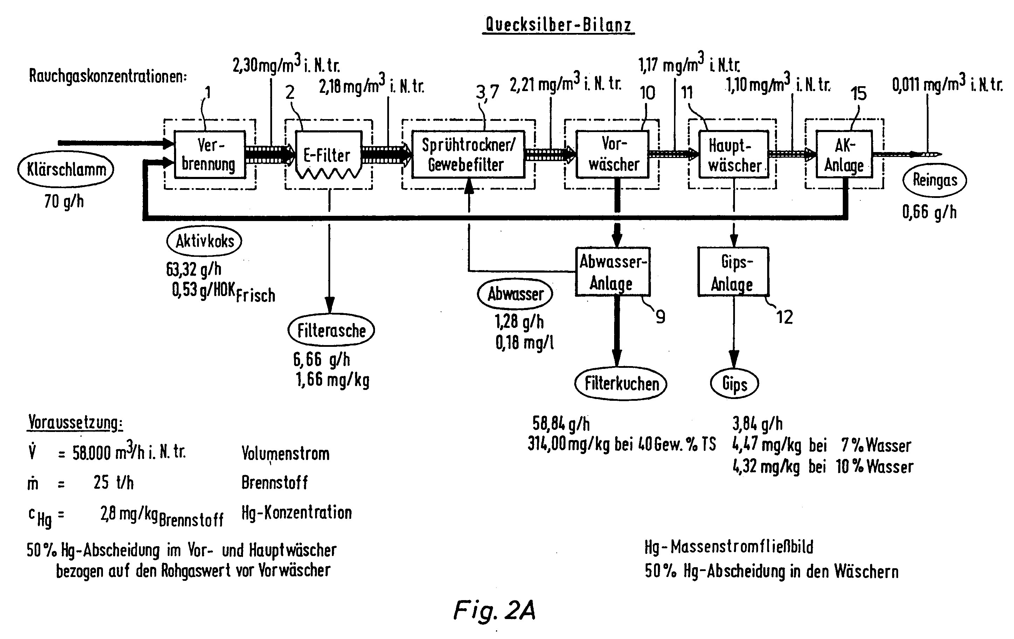

Fig. 2a zeigt ein Diagramm mit Hg-Konzentrationen und Massenströmen an verschiedenen Stellen einer bekannten Rauchgasreinigungsanlage unter der Voraussetzung einer 50%igen Quecksilberabscheidung in den Wäschern 10 und 11. Die Breite der Pfeile ist ein Maß für den Hg-Massenstromfluß. Am Rand schraffierte Pfeile kennzeichnen die Hg-Konzentration im Rauchgas. Die Quecksilberkonzentrationsangaben beziehen sich in der folgenden Beschreibung immer auf den trockenen Aggregatzustand und Normbedingungen. Bei dem beschriebenen Ausführungsbeispiel wird Klärschlamm mit einem Quecksilber-Massenstrom von 7g/h in die Verbrennungsanlage 1 eingeleitet. Das bei der Verbrennung entstehende Rauchgas hat eine Quecksilberkonzentration von 2,3 mg/m³. In dem nachgeschalteten Elektrofilter 2 werden pro Stunde 6,66g Quecksilber mit der Filterasche ausgeschieden. Der Rauchgasstrom mit entsprechend reduzierter Quecksilberkonzentration durchläuft den Sprühtrockner 3 und das Gewebefilter 7 und erreicht den Vorwäscher 10. Der vom Vorwäscher nach unten gerichtete breite Quecksilber-Massenstrompfeil zeigt an dieser Stelle eine starke Quecksilberabscheidung an. Dies geschieht über die Abwasseranlage 9, in der im Filterkuchen 58,84g Hg/h anfallen. Das um diese Quecksilbermenge entlastete Rauchgas erreicht den Hauptwäscher 11 mit einer Quecksilberkonzentration von 1,17 mg/m³. Hier wird ein Quecksilber-Massenstrom von 3,84g/h über die Gipsentwässerungsanlage 12 ausgeschieden. Der das Quecksilber enthaltende Gips hat bei einer Wasserkonzentration von 10% eine Quecksilberkonzentration von 4,32mg/kg. Der Gips ist aufgrund der hohen Quecksilberkonzentration nur mit einem "schlechten" REA-Gips zu vergleichen. Im Rauchgas verbleibt eine Quecksilberkonzentration von 1,10mg/m³. In der nachgeschalteten Aktivkoksanlage 15 erfolgt die stärkste Quecksilberausscheidung. Ein Massenstrom von 63,32g/h Quecksilber wird mit dem belasteten Aktivkoks in die Verbrennungsanlage 1 zurückgeleitet. Er verbleibt also im Reinigungskreislauf. Hinter der Aktivkoksanlage 15 hat das die Rauchgasreinigungsanlage verlassende Reingas eine relativ niedrige Quecksilberrestkonzentration von 0,011mg/m³.

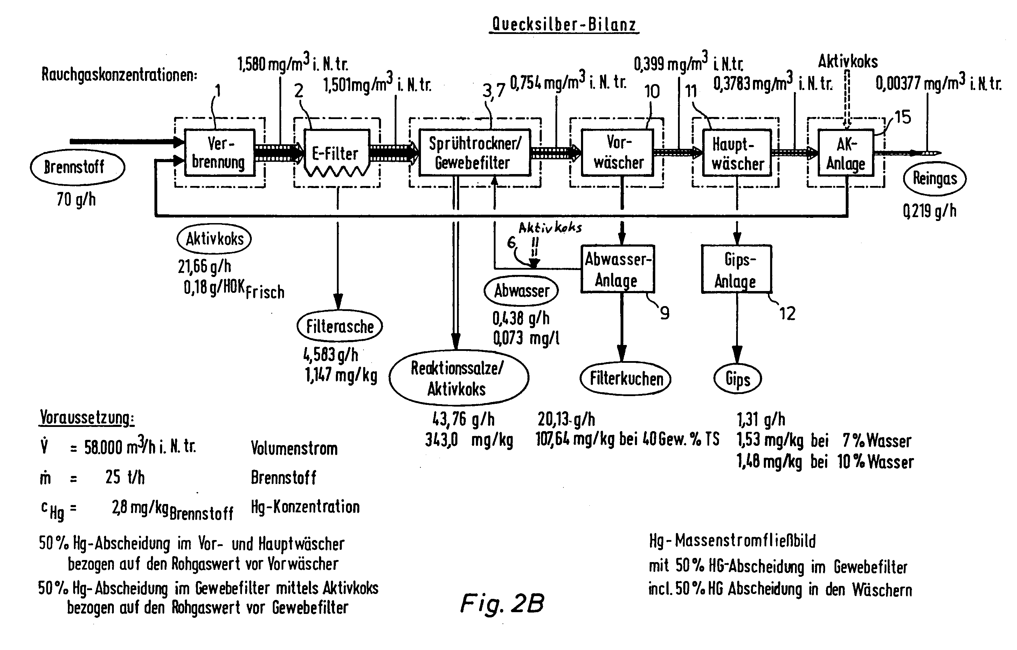

Fig. 2b zeigt ein Diagramm ähnlich demjenigen in Fig. 2a für das Ausführungsbeispiel gemäß Fig. 1. Der Verbrennungsanlage 1 wird ein Brennstoff (Klärschlamm) mit einer Quecksilberkonzentration von 70g/h zugeführt. Der von der Aktivkoksanlage 15 zugeführte Quecksilbermassenstrom (21,66g/h) ist im Fall der Fig. 2b wesentlich niedriger als in Fig.2a. Infolgedessen ist die Quecksilberkonzentration im Rauchgas mit 1,580mg/m³ in der erfindungsgemäßen Anordnung von Anfang an wesentlich geringer. Vom Elektrofilter 2 wird bei dieser Rauchgaskonzentration ein Quecksilber-Massenstrom von 4,583g/h abgeschieden. Im Rauchgas verbleibt eine Quecksilberkonzentration von 1,501mg/m³. Durch das Zuführen des Aktivkoks' an der Einleitungsstelle 6 wird in der Sprühtrockner- und Gewebefiltereinheit 3, 7 ein Quecksilber-Massenstrom von 43,76g/h abgeführt. Der größte Teil des Quecksilbers wird also bereits vor dem Vorwäscher 10 aus dem Rauchgasstrom abgetrennt. Der in 3,6,7 vorgereinigte Rauchgasstrom hat eine Quecksilberkonzentration von nur noch 0,754mg/m³. Im Vorwäscher 10 wird ein Quecksilber-Massenstrom von 20,13g/h aus dem Rauchgasstrom abgeführt. Dadurch wird die Quecksilberkonzentration im Rauchgas auf 0,399mg/m³. reduziert. Im Hauptwäscher 11 wird dann nur noch ein geringer Quecksilber-Massenstrom von 1,31g/h über die Gipsanlage in den Gips eingebracht. Der bei dem beschriebenen Ausführungsbeispiel anfallende Gips hat bei einer Wasserkonzentration von 10% eine Quecksilberkonzentration von nur 1,48mg/kg (Bei 7% Wasser : 1,53 mg/kg Hg). Die Gipsqualität wurde also gegenüber dem bekannten Verfahren (4,32mg/kg) erheblich verbessert. Die Quecksilberkonzentration im Rauchgas beträgt nach dem Hauptwäscher noch 0,3783mg/m³. In der letzten Reinigungsstufe, d.h. in der Aktivkoksanlage 15, wird dem Rauchgas ein Quecksilbermassenstrom von 21,66g/h entzogen und mit dem Altkoks zu der Verbrennungsanlage 1 zurückgeführt. Das Reingas hat beim Austritt aus der erfindungsgemäßen Rauchgasreinigungsanlage eine Quecksilberkonzentration von nur noch 0,00377mg/m³. Die Quecksilberbelastung des emittierten Reingases beträgt in Bezug auf das bekannte Verfahren nur 1/3.

Die erfindungsgemäße Anordnung stellt also auf der einen Seite einen Gips zur Verfügung, der umweltverträglich ist und eine hohe Marktakzeptanz hat und dementsprechend wirtschaftlich genutzt werden kann. Auf der anderen Seite liefert die erfindungsgemäße Anlage ein Reingas mit stark reduzierter Schwermetallkonzentration, wodurch das Reingas nicht nur heutigen, sondern auch zukünftigen Umweltstandards gerecht wird. Im Rahmen des Erfindungsgedankens sind viele Abwandlungen möglich. Insbesondere kann der Prozentsatz der Quecksilberabscheidung im Gewebefilter 7 und in den Wäschern 10, 11 durch Variieren der zugeführten Betriebsmittelmengen und/oder der Qualität des Gewebefilters verändert werden. Das Abkühlen des Rauchgases kann unter Verwendung beliebiger Kühlsubstanzen geschehen. Außerdem können beliebig viele Wäscher im Rauchgasstrom angeordnet werden. Auch die Zufuhr des staubförmigen Adsorbens Aktivkoks kann an mehreren Stellen in der Anlage erfolgen. Das staubförmige, aus Kohlenstoff bestehende Adsorbens wird mit einem Wasserstrom gemischt und in den Sprühtrockner 3 eingeleitet. Bei dem beschriebenen Ausführungsbeispiel bietet sich die Rückführleitung als Aufgabeleitung für das Kohlenstoffadsorbens an. Alternativ kann die Kohlenstoffeinführung auch direkt in den Sprühtrockner 2 oder in den Rauchgasstrom vor dem Sprühtrockner eingeführt werden.

## Patentansprüche

1. Anordnung zur Reinigung der Rauchgase einer Verbrennungsanlage enthaltend: eine erste Filtervorrichtung (2) zur Abtrennung von Feststoffteilchen aus dem Rauchgasstrom,
eine der ersten Filtervorrichtung (2) nachgeschalteten Sprühtrocknungsvorrichtung (3),
eine der Sprühtrocknungsvorrichtung (3) nachgeschalteten zweiten Filtervorrichtung (7) zum Abtrennen von Feststoffen aus der Sprüchtrocknung, insbesondere Salzen, wie Calciumchlorid und Calciumfluorid,
einen der zweiten Filtervorrichtung (7) nachgeschalteten ersten Wäscher (10) zum Abscheiden von Halogenen, Schwermetallen, Schwefeloxid und Reststaub und einem dem ersten Wäscher (10) nachgeschalteten zweiten Wäscher (11), in dem das Rauchgas mit einer calciumhaltigen Waschflüssigkeit gewaschen und aus dieser Waschflüssigkeit ein gipshaltiges Reaktionsprodukt abgeschieden wird, und eine dem zweiten Wäscher (11) nachgeschalteten Adsorptionsanlage (15) zur Restabtrennung von Schadstoffen,
wobei dem ersten Wäscher (10) eine Abwasseraufbereitungsanlage (9) zugeordnet ist,
die für die Zufuhr wenigstens eines Teils des aufbereiteten Waschwassers mit der Sprühtrocknungsvorrichtung (3) verbunden ist, und mindestens eine in einer zur Sprühtrocknungsvorrichtung (3) führenden Wasserleitung (4) angeordnete Einleitungsstelle (6) für die Einleitung von vorwiegend aus Kohlenstoff (Aktivkohle und/oder -koks) bestehendem staubförmigen Adsorbens, an dem sich Schwermetalle anlagern können vor der zweiten Filtervorrichtung (7) angeordnet ist derart, daß das eingeleitete und beladene Adsorbens zusammen mit Feststoffen aus der Sprühtrocknung des Abwassers aus dem Rauchgasstrom abtrennbar ist.

2. Anordnung nach Anspruch 1, dadurch gekennzeichnet, daß als erste Filtervorrichtung (2) ein Elektrofilter vorgesehen ist.

3. Anordnung nach Anspruch 1 oder 2, dadurch gekennzeichnet, daß die zweite Filtervorrichtung (7) als Gewebefilter ausgebildet ist.

4. Anordnung nach einem der Ansprüche 1 bis 3, dadurch gekennzeichnet, daß mit der Wascheinrichtung (10,11) eine Gipsentwässerungseinrichtung (12) verbunden ist, in der das gipshaltige Reaktionsprodukt entwässert wird.

5. Anordnung nach einem der Ansprüche 1 bis 4, dadurch gekennzeichnet, daß der Wascheinrichtung (10, 11) ein Rauchgaserhitzer (13) nachgeschaltet ist.

6. Anordnung nach einem der Ansprüche 1 bis 5, dadurch gekennzeichnet, daß zwischen dem Rauchgaserhitzer (13) un der Adsorptionsanlage (15) ein erstes Gebläse (14) angeordnet ist, das für die notwendigen Druckverhältnisse in der Verbrennungsanlage (1) und für den Rauchgastransport aus der Verbrennungsanlage (1) sorgt.

7. Anordnung nach einem der Ansprüche 1 bis 6, dadurch gekennzeichnet, daß zwischen der Adsorptionsanlage (15) und dem Schornstein (17) zum Reingastransport ein zweites Gebläse (16) angeordnet ist.

8. Anordnung nach Anspruch 7, dadurch gekennzeichnet, daß ein Sicherheitskühlkreislauf (18) mit Kühleinheit (19) und Rauchgaserhitzer (20) in einen Rückkopplungszweig vom Ausgang des zweiten Gebläses (16) zum Eingang der Adsorptionsanlage (15) zurückgeführt ist.

9. Verfahren zur Reinigung der Rauchgase einer Verbrennungsanlage, wobei in einer Filterstufe Feststoffteilchen aus dem Rauchgas abgetrennt werden, das Rauchgas anschließend durch Zufuhr von Abwasser unter Sprühtrocknung des Abwassers gekühlt wird, sodann unmittelbar anschließend in einer zweiten Filterstufe Feststoffe aus der Sprühtrocknung aus dem Rauchgas entfernt werden,
danach das Rauchgas zunächst mit Wasser und anschließend mit einer calciumhaltigen Waschflüssigkeit gewaschen wird,
wobei wenigstens Halogene, Schwermetalle, Schwefeloxid und Reststaub und danach der Erzeugung eines gipshaltigen Reaktionsproduktes Schwefeloxid abgeschieden werden und danach das gewaschene Rauchgas anschließend einer
Adsorptionsbehandlung unterworfen und das Adsorptionsmittel mit Schadstoffen aus dem Rauchgas beladen wird, wobei aus der ersten Waschstufe mit Wasser ein Abwasser abgeleitet, aufbereitet, wenigstens ein Teil des aufbereiteten Abwassers zusammen mit einem in das Abwasser eingeleiteten vorwiegend aus Kohlenstoff (Aktivkoks und/oder Aktivkohle) bestehendes staubförmiges Adsorbens der Sprühtrocknung zugeführt wird, an dem sich Schwermetalle anlagern können
und in der zweiten Filterstufe das beladene Adsorbens zusammen mit Feststoffen aus der Sprüchtrocknung abgetrennt wird, so daß nachfolgend beim Waschen des Rauchgasstromes mit der calciumhaltigen Waschflüssigkeit ein gipshaltiges Reaktionsprodukt mit einem niedrigen Schwermetallgehalt abgeschieden wird.

10. Verfahren nach Anspruch 9, dadurch gekennzeichnet, daß das Adsorbens aus im wesentlichen reinem Kohlenstoff (Aktivkoks und/oder -kohle) besteht.

11. Verfahren nach Anspruch 9 oder 10, dadurch gekennzeichnet, daß in das Rauchgas vor dem Waschen Fällungsmittel eingeleitet werden.

12. Verfahren nach einem der Ansprüche 9 bis 11, dadurch gekennzeichnet, daß beim Waschen in einer zweiten Stufe Kalkhydrat zugeführt wird.

13. Verfahren nach einem der Ansprüche 9 bis 12, dadurch gekennzeichnet, daß das beim Waschen abgeführte gipshaltige Reaktionsprodukt entwässert wird.

14. Verfahren nach einem der Ansprüche 9 bis 13, dadurch gekennzeichnet, daß das Rauchgas von der Verbrennungsanlage zum Schornstein im Saugstrom transportiert wird.

15. Verfahren nach einem der Ansprüche 9 bis 14, dadurch gekennzeichnet, daß das mit Schadstoffen beladene Adsorbens in die Verbrennungsanlage zurückgeführt und dort verbrannt wird.

## Claims

1. Arrangement for cleaning the flue gases of a combustion plant, comprising a first filter device (2) for separating out solid particles from the flue gas flow, a spray drying device (3) connected downstream of the first filter device (2), a second filter device (7), which is connected downstream of the spray drying device (3), for separating out solids from the spray drying, especially salts such as calcium chloride and calcium fluoride, a first washer (10), which is connected downstream of the second filter device (7), for dividing out halogens, heavy metals, sulfur oxide and residual dust, and a second washer (11), which is connected downstream of the first washer (10) and in which the flue gas is washed by a washing liquid containing calcium and a reaction product containing calcium sulfate is divided out of this washing liquid, and an adsorption plant (15), which is connected downstream of the second washer (11), for residual separating out of noxious substances, wherein associated with the first washer (10) is a waste water preparation plant (9) which, for the feed of at least a part of the prepared washing water, is connected with the spray drying device (3), and at least one infeed point (6), which is arranged in a water duct (4) leading to the spray drying device (3), for the introduction of a powder adsorber, which consists predominantly of carbon (activated coke and/or activated carbon) and at which heavy metals can precipitate before the second filter device (7), is arranged in such a manner that the introduced and charged adsorber together with solids from the spray drying of the waste water can be separated out from the flue gas flow.

2. Arrangement according to claim 1, characterised in that an electrostatic precipitator is provided as the first filter device (2).

3. Arrangement according to claim 1 or 2, characterised in that the second filter device (2) is constructed as a fabric filter.

4. Arrangement according to one of claims 1 to 3, characterised in that a calcium sulfate drying device (12), in which the reaction product containing calcium sulfate is dried, is connected with the washing equipment (10, 11).

5. Arrangement according to one of claims 1 to 4, characterised in that a flue gas heater (13) is connected downstream of the washing equipment (10, 11).

6. Arrangement according to one of claims 1 to 5, characterised in that arranged between the flue gas heater (13) and the adsorption plant (15) is a first blower (14) which looks after the required pressure ratios in the combustion plant (1) and the flue gas transport out of the combustion plant (1).

7. Arrangement according to one of claims 1 to 6, characterised in that a second blower (16) is arranged between the adsorption plant (15) and the chimney (17) for the transport of clean gas.

8. Arrangement according to claim 7, characterised in that a safety cooling circuit (18) with a cooling unit (19) and a flue gas heater (20) is led back in a feedback branch from the outlet of the second blower (16) to the inlet of the adsorption plant (15).

9. Method of cleaning flue gases of a combustion plant, wherein solid particles are separated out from the flue gas in a filter stage, the flue gas is subsequently cooled by feed of waste water while spray drying of the waste water, directly thereafter solids from the spray drying are removed from the flue gas in a second filter stage, and thereafter the flue gas is washed initially with water and subsequently with a washing liquid containing calcium, wherein at least halogens, heavy metals, sulfur oxide and residual dust and thereafter, for production of a reaction product containing calcium sulfate, sulfur oxide are separated out and consecutively thereafter the washed flue gas is subjected to an adsorption treatment and the adsorption means is charged with noxious substances from the flue gas, wherein a waste water is discharged from the first washing stage with water and is prepared and at least a part of the prepared waste water together with a powder adsorber, which is introduced into the waste water and consists predominantly of carbon (activated coke and/or activated carbon), is fed to the spray drying, at which heavy metals can precipitate, and in the second filter stage the charged adsorber together with solids from the spray drying are separated out, so that subsequently during washing of the flue gas flow with the washing liquid containing calcium a reaction product containing calcium sulfate with a low content of heavy metal is divided out.

10. Method according to claim 9, characterised in that the adsorber consists substantially of pure carbon (activated coke and/or activated carbon).

11. Method according to claim 9 or 10, characterised in that precipitating agents are introduced into the flue gas before the washing.

12. Method according to one of claims 9 to 11, characterised in that calcium hydroxide is fed in a second stage during the washing.

13. Method according to one of claims 9 to 12, characterised in that the reaction production, which contains calcium sulfate and is discharged during the washing, is dried.

14. Method according to one of claims 9 to 13, characterised in that the flue gas is transported from the combustion plant to the chimney in the suction flow.

15. Method according to one of claims 9 to 14, characterised in that the adsorber charged with noxious substances is fed back into the combustion plant and combusted there.

## Revendications

1. Agencement pour l'épuration des gaz brûlés d'une installation de combustion contenant :
un premier dispositif de filtration (2) pour la séparation des particules solides du courant des gaz brûlés,
un dispositif de séchage par pulvérisation (3) placé derrière le premier dispositif de filtration (2),
un second dispositif de filtration (7) suivant le dispositif de séchage par pulvérisation (3) pour la séparation des matières solides du séchage par pulvérisation, en particulier des sels tels que le chlorure de calcium et le fluorure de calcium,
un premier laveur (10) suivant le second dispositif de filtration (7) pour la séparation des halogènes, des métaux lourds, de l'oxyde de soufre et des poussières résiduelles et un second laveur (11) suivant le premier laveur (10) dans lequel les gaz brûlés sont lavés avec un liquide de lavage contenant du calcium et, de ce liquide de lavage, est séparé un produit réactionnel contenant du gypse, et une installation d'adsorption (15) suivant le second laveur (11) pour la séparation résiduelle des matières nocives, au premier laveur (10) étant affectée une installation de traitement des eaux usées (9) qui est reliée au dispositif de séchage par pulvérisation (3) pour l'amenée d'au moins une partie de l'eau de lavage traitée et au moins un point d'entrée (6) agencé dans une conduite d'eau (4) menant au dispositif de séchage par pulvérisation (3) pour l'introduction d'un adsorbant pulvérulent se composant principalement de carbone (charbon activé et/ou coke active) où peuvent se déposer les métaux lourds est agencé avant le second dispositif de filtration (7) de façon que l'adsorbant introduit et chargé puisse être séparé en même temps que les matières solides, du produit de séchage par pulvérisation des eaux usées provenant du courant de gaz brûlés.

2. Agencement selon la revendication 1, caractérisé en ce qu'en tant que premier dispositif de filtration (2) est prévu un électrofiltre.

3. Agencement selon la revendication 1 ou 2, caractérisé en ce que le second dispositif de filtration (7) est configuré comme un filtre texturé.

4. Agencement selon l'une des revendications 1 à 3, caractérisé en ce qu'au système de lavage (10, 11) est relié un système de déshydratation du gypse (12) dans lequel est déshydraté le produit réactionnel contenant du gypse.

5. Agencement selon l'une des revendications 1 à 4, caractérisé en ce que le système de lavage (10, 11) est suivi d'un réchauffeur des gaz brûlés (13).

6. Agencement selon l'une des revendications 1 à 5, caractérisé en ce qu'entre le réchauffeur des gaz brûlés (13) et l'installation d'adsorption (15) est agencé un premier ventilateur (14) qui pourvoit aux conditions nécessaires de pression dans l'installation de combustion (1) et pour le transport des gaz brûlés hors de l'installation de combustion (1).

7. Agencement selon l'une des revendications 1 à 6, caractérisé en ce qu'entre l'installation d'adsorption (15) et la cheminée (17) pour le transport des gaz épurés est agencé un second ventilateur (16).

8. Agencement selon la revendication 7, caractérisé en ce qu'un circuit de refroidissement de sécurité (18) avec unité de refroidissement (19) et réchauffeur à des gaz brûlés (20) est prévu dans une branche de retour de la sortie du second ventilateur (16) à l'entrée de l'installation d'adsorption (15).

9. Procédé pour l'épuration des gaz brûlés d'une installation de combustion où, dans un étage de filtration, des particules solides sont séparées des gaz brûlés, ensuite les gaz brûlés sont refroidis par amenée d'eaux usées et séchage par pulvérisation des eaux usées, de façon que directement après dans un second stade de filtration les matières solides, provenant du séchage par pulvérisation, puissent être retirées des gaz brûlés, ensuite, les gaz brûlés sont lavés d'abord avec de l'eau, ensuite avec un liquide de lavage contenant du calcium,
où au moins les halogènes, les métaux lourds, l'oxyde de soufre et les matières résiduelles et, après la production d'un produit réactionnel contenant du gypse, l'oxyde de soufre, sont séparés et ensuite les gaz brûlés lavés sont soumis à un traitement d'adsorption et l'agent d'adsorption est chargé des matières nocives contenues dans les gaz brûlés, où du premier stade de lavage avec de l'eau, des eaux usées sont récupérées, traitées et au moins une partie des eaux usées traitées est conduite en même temps qu'un adsorbant pulvérulent introduit dans les eaux usées se composant principalement de carbone (coke activé et/ou charbon activé) est conduit au séchage par pulvérisation où peuvent se déposer les métaux lourds et dans le second stade de filtration, l'adsorbant chargé est séparé en même temps que les matières solides du produit du séchage par pulvérisation donc, subséquemment, lors du lavage du courant de gaz brûlés avec le liquide de lavage contenant du calcium, on sépare un produit réactionnel contenant du gypse avec une teneur minime en métaux lourds.

10. Procédé selon la revendication 9, caractérisé en ce que l'adsorbant se compose de carbone essentiellement pur (coke activé et/ou charbon activé).

11. Procédé selon la revendication 9 ou 10, caractérisé en ce que dans les gaz brûlés est introduit, avant le lavage, un agent de décantation.

12. Procédé selon l'une des revendications 9 à 11, caractérisé en ce que lors du lavage dans un second stade, de l'hydrate de chaux est introduit.

13. Procédé selon l'une des revendications 9 à 12, caractérisé en ce que le produit réactionnel contenant du gypse obtenu lors du lavage est déshydraté.

14. Procédé selon l'une des revendications 9 à 13, caractérisé en ce que les gaz brûlés sont transportés en provenant de l'installation de combustion, à la cheminée, dans un courant d'aspiration.

15. Procédé selon l'une des revendications 9 à 14, caractérisé en ce que l'adsorbant chargé des matières nocives est retourné dans l'installation de combustion et y est brûlé.
